(19) Europäisches Patentamt
European Patent Office
Office européen des brevets

(11) Veröffentlichungsnummer: **0 441 166 A2**

(12) **EUROPÄISCHE PATENTANMELDUNG**

(21) Anmeldenummer: **91100759.9**

(22) Anmeldetag: **22.01.91**

(51) Int. Cl.⁵: **D06P 3/82**, C09B 29/42, C09B 67/22

(30) Priorität: **09.02.90 DE 4003887**

(43) Veröffentlichungstag der Anmeldung: **14.08.91 Patentblatt 91/33**

(84) Benannte Vertragsstaaten: **CH DE FR GB IT LI**

(71) Anmelder: **CASSELLA Aktiengesellschaft**
**Hanauer Landstrasse 526**
**W-6000 Frankfurt am Main 61(DE)**

(72) Erfinder: **Binder, Rudolf, Dr.**
**Am Hochstädter Rain 6**
**W-6457 Maintal 4(DE)**
Erfinder: **Bühler, Ulrich, Dr.**
**Kastanienweg 8**
**W-8755 Alzenau(DE)**
Erfinder: **Schophoff, Friedrich, Dr.**
**Konstanzer Strasse 64**
**W-6000 Frankfurt/M. 60(DE)**
Erfinder: **Boos, Margareta**
**Am See 6**
**W-6234 Hattersheim(DE)**
Erfinder: **Kühn, Reinhard**
**Heinrich-Bleicher-Strasse 39**
**W-6000 Frankfurt/M. 50(DE)**

(74) Vertreter: **Urbach, Hans-Georg, Dr. et al**
**Hanauer Landstrasse 526**
**W-6000 Frankfurt am Main 61(DE)**

# (54) Verfahren zur Herstellung ausgerüsteter, thermomigrierechter Färbungen.

(57) Die vorliegende Erfindung betrifft ein Verfahren zur Herstellung ausgerüsteter, hochthermomigrierechter Färbungen auf ganz oder teilweise aus Polyester bestehenden Fasermaterialien, dadurch gekennzeichnet, daß mit einem oder mehreren Farbstoffen der allgemeinen Formel I

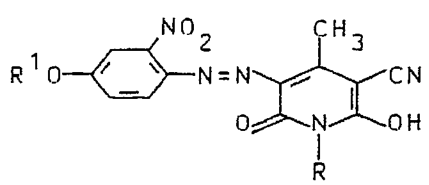

(I)

worin

R lineares ($C_1$-$C_3$)-Alkyl oder mit einem Sauerstoffatom unterbrochenes ($C_3$-$C_6$)-Alkyl und

$R^1$ ($C_1$-$C_4$)-Alkyl

bedeuten, gefärbt wird und anschließend die so erhaltene Färbung ausgerüstet wird.

EP 0 441 166 A2

## VERFAHREN ZUR HERSTELLUNG AUSGERÜSTETER, THERMOMIGRIERECHTER FÄRBUNGEN

An textile Materialien, speziell an gefärbte Artikel aus Polyesterfasern und deren Mischungen mit natürlichen Fasern, beispielsweise Cellulosefasern, werden nach modernen Gebrauchsgepflogenheiten hohe Waschechtheitsanforderungen gestellt. Höherwertige Materialien werden im allgemeinen mit Kunstharzen und/oder Weichmachern hochveredelt, um sie pflegeleicht zu machen, wobei insbesondere Eigenschaften wie Bügel-, Krumpf- und Knitterfreiheit erwünscht sind (siehe z.B. Ullmanns Encyklopädie der technischen Chemie, 4. Aufl., Bd. 23, Seiten 77 ff.).

Es ist allgemein bekannt, daß die so nach dem heutigen Stand der Technik behandelten gefärbten Materialien nach einer nachträglichen Wärmebehandlung wie z.B. dem in der Praxis üblichen Thermofixieren bei 180°C oder nach längerem Lagern bei Raumtemperatur kaum mehr befriedigende Naßechtheiten, insbesondere keine befriedigende Waschechtheit bei 60°C mit Haushaltswaschmitteln gemäß DIN 54017 aufweisen. Das als Begleitmaterial bei der Waschechtheitsprüfung üblicherweise verwendete Mehrfaserband zeigt stets ein starkes Anbluten, wovon besonders dessen Celluloseacetatfaser- und Polyamidfaseranteile betroffen sind. Diese unerwünschte Erscheinung wird auf die Neigung praktisch aller im Handel befindlichen Dispersionsfarbstoffe zum Thermomigrieren zurückgeführt. Der Farbstoff, der sich durch die Hitzebehandlung auf der Faseroberfläche ansammelt, wird bei der Wäsche abgelöst und färbt die im oben erwähnten Standardtest verwendeten Begleitgewebe mehr oder weniger stark an. Besonders nachteilig macht sich dieser Effekt beispielsweise bei Sportbekleidungsartikeln aus texturiertem Polyester- oder Polyester/Baumwollmaterialien bemerkbar. Diese Artikel sind bekanntlich häufig zur Verzierung mit weißen Geweabschnitten aus dem gleichen oder einem anderen (z.B. Polyamid-) Fasermaterial abgesetzt, die dann bei der Wäsche angeschmutzt werden.

Bekannte Farbstoffe des Standes der Technik sind beispielsweise C.I. Disperse Orange 151 und C.I. Disperse Orange 139. Disperse Orange 151 weist eine gute Thermomigrierechtheit, aber gleichzeitig auch eine so starke pH-Empfindlichkeit auf, daß es für das häufig vewendete HT-Färbeverfahren nur bedingt einsetzbar ist, während Disperse Orange 139 gut HT-färbbar ist, dafür aber eine schlechte Thermomigrierechtheit aufweist.

Die vorliegende Erfindung betrifft ein Verfahren zur Herstellung ausgerüsteter, hochthermomigrierechter Färbungen auf ganz oder teilweise aus Polyester bestehenden Fasermaterialien, dadurch gekennzeichnet, daß mit einem oder mehreren Farbstoffen der allgemeinen Formel I

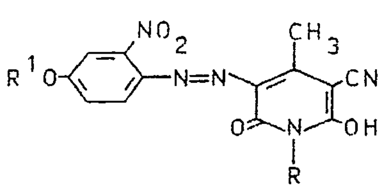

(I)

worin

R  lineares $(C_1\text{-}C_3)$-Alkyl oder mit einem Sauerstoffatom unterbrochenes $(C_3\text{-}C_6)$-Akyl und
$R^1$  $(C_1\text{-}c_4)$-Alkyl

bedeuten, gefärbt wird und anschließend die so erhaltene Färbung ausgerüstet wird.

R bedeutet bevorzugt $(C_1\text{-}C_2)$-Alkyl oder $(C_1\text{-}C_3)$-Alkoxy-propyl und besonders bevorzugt Ethyl oder Methoxypropyl. Ein für $R^1$ stehender Alkylrest kann linear oder verzweigt sein. Bevorzugt bedeutet $R^1$ $(C_1\text{-}C_2)$-Alkyl und besonders bevorzugt Methyl.

Die Farbstoffe der allgemeinen Formel I können allein, in Mischungen untereinander oder auch in Mischungen mit anderen Farbstoffen eingesetzt werden.

Es ist bevorzugt, die Farbstoffe der allgemeinen Formel I in Mischung mit roten oder mit blauen oder in Mischung mit roten und blauen Farbstoffen einzusetzen.

Bevorzugte rote Farbstoffe sind Farbstoffe der allgemeinen Formel II

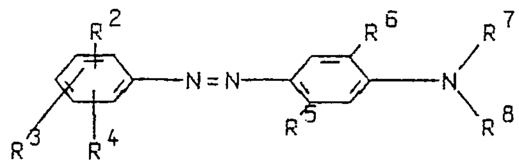

(II)

worin

| | |
|---|---|
| $R^2$, $R^3$, $R^4$ | unabhängig voneinander Wasserstoff, Methyl, Chlor, Brom, Nitro, $SO_2CH_3$, COOX oder Cyan, wobei mindestens ein Rest ungleich Wasserstoff sein muß; |
| $R^5$ | Wasserstoff, X, NHCOX oder $NHSO_2CH_3$; |
| $R^6$ | Wasserstoff oder Chlor; |
| $R^7$ und $R^8$ | unabhängig voneinander Wasserstoff, X, $(CH_2)_nOCOX$, $(CH_2)_nCOOX$ oder $(CH_2)_nCN$, wobei nicht beide Reste gleichzeitig für Wasserstoff stehen können; |
| X | lineares ($C_1$-$C_4$)-Alkyl, bevorzugt ($C_1$-$C_2$)-Alkyl und |
| n | eine ganze Zahl von 1 bis 4, bevorzugt 2, bedeuten, |

Farbstoffe der allgemeinen Formel III

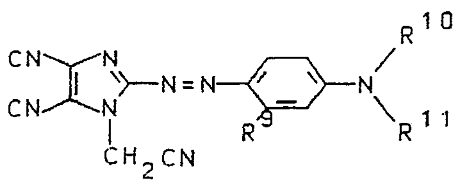

(III)

worin

$R^9$ Wasserstoff, Chlor, Brom oder Methyl und

$R^{10}$ und $R^{11}$ unabhängig voneinander lineares ($C_1$-$C_4$)-Alkyl, $(CH_2)_3COOCH_3$ oder $(CH_2)_3COOC_2H_5$ bedeuten,

und der Farbstoff C.I. Disperse Red 356.

Besonders bevorzugte Farbstoffe der allgemeinen Formel II sind solche in denen $R^2$ o-Cl, $R^3$ p-$NO_2$, $R^4$ Wasserstoff, $R^5$ $NHCOCH_3$ oder $NHCOC_2H_5$, $R^6$ Wasserstoff und $R^7$ und $R^8$ $CH_2CH_2OCOCH_3$ bedeuten, sowie der Farbstoff mit $R^2$, $R^4$ und $R^6$ Wasserstoff, $R^3$ p-$NO_2$, $R^5$ $NHCOCH_3$ und $R^7$ und $R^8$ $CH_2CH_2COOCH_3$.

Ein besonders bevorzugter Farbstoff der allgemeinen Formel III ist der Farbstoff mit $R^9$ $CH_3$, $R^{10}$ n-$C_4H_9$ und $R^{11}$ $(CH_2)_3COOC_2H_5$.

Bevorzugte blaue Farbstoffe sind Farbstoffe der allgemeinen Formel IV

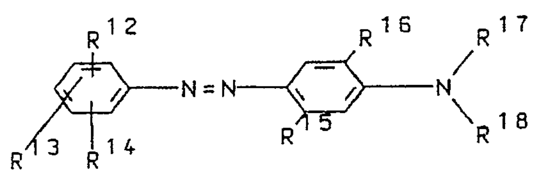

(IV)

worin

| | |
|---|---|
| $R^{12}$, $R^{13}$, $R^{14}$ | unabhängig voneinander Wasserstoff, Methyl, Chlor, Brom, Nitro, $SO_2CH_3$, COOX oder Cyan, wobei mindestens ein Rest ungleich Wasserstoff sein muß; |
| $R^{15}$ | Wasserstoff, X, NHCOX oder $NHSO_2CH_3$; |
| $R^{16}$ | Wasserstoff oder OY; |
| $R^{17}$ und $R^{18}$ | unabhängig voneinander Wasserstoff, X, $(CH_2)_nOCOX$, $(CH_2)_nCOOX$ oder $(CH_2)_nCN$, wobei nicht beide Reste gleichzeitig für Wasserstoff stehen können; |
| X | lineares ($C_1$-$C_4$)-Alkyl, bevorzugt ($C_1$-$C_2$)-Alkyl; |
| n | eine ganze Zahl von 1 bis 4, bevorzugt 2, und |
| Y | lineares ($C_1$-$C_4$)-Alkyl, bevorzugt ($C_1$-$C_2$)-Alkyl, oder mit einem Sauerstoffatom unterbrochenes ($C_3$-$C_6$)-Alkyl, bevorzugt ($C_1$-$C_2$)-Alkoxyethyl, bedeuten, |

Farbstoffe der allgemeinen Formel V

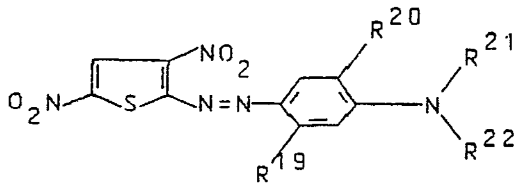

(V)

worin

| | |
|---|---|
| $R^{19}$ | Wasserstoff, X, NHCOX oder $NHSO_2CH_3$; |
| $R^{20}$ | Wasserstoff oder Chlor; |
| $R^{21}$ und $R^{22}$ | unabhängig voneinander Wasserstoff, X, $(CH_2)_nOH$, $(CH_2)_nOCOX$, $(CH_2)_nCOOX$ oder $(CH_2)_nCN$, wobei nicht beide Reste gleichzeitig für Wasserstoff stehen können; |
| X | lineares $(C_1\text{-}C_4)$-Alkyl, bevorzugt $(C_1\text{-}C_2)$-Alkyl und |
| n | eine ganze Zahl von 1 bis 4, bevorzugt 2, |

bedeuten,

und Farbstoffe der allgemeinen Formel VI

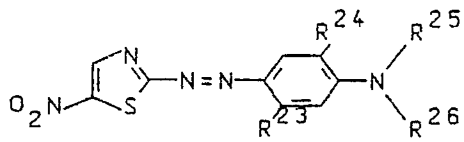

(VI)

worin

| | |
|---|---|
| $R^{23}$ | Wasserstoff, X, NHCOX oder $NHSO_2CH_3$; |
| $R^{24}$ | Wasserstoff oder OY; |
| $R^{25}$ und $R^{26}$ | unabhängig voneinander Wasserstoff, X, $(CH_2)_nOCOOX$, $(CH_2)_nOCOX$, $(CH_2)_nCOOX$ oder $(CH_2)_nCN$, wobei nicht beide Reste gleichzeitig für Wasserstoff stehen können; |
| X | lineares $(C_1\text{-}C_4)$-Alkyl, bevorzugt $(C_1\text{-}C_2)$-Alkyl; |
| n | eine ganze Zahl von 1 bis 4, bevorzugt 2, und |
| Y | lineares $(C_1\text{-}C_4)$-Alkyl, bevorzugt $(C_1\text{-}C_2)$-Alkyl, oder mit einem Sauerstoffatom unterbrochenes $(C_3\text{-}C_6)$-Alkyl, bevorzugt $(C_1\text{-}C_2)$-Alkoxyethyl, |

bedeuten.

Besonders bevorzugte Farbstoffe der allgemeinen Formel IV sind solche in denen R $^{12}$ und $R^{13}$ o- und p-$NO_2$, $R^{14}$ o-Cl oder Br, $R^{15}$ $NHCOCH_3$, $R^{16}$ $OCH_3$ oder $OC_2H_5$ und $R^{17}$ und $R^{18}$ $CH_2CH_2OCOCH_3$ bedeuten, sowie Farbstoffe in denen $R^{12}$ und $R^{13}$ o- und p-$NO_2$, $R^{14}$ o-Cl, $R^{15}$ $NHCOCH_3$, $R^{16}$ Wasserstoff oder $OCH_3$ und $R^{17}$ und $R^{18}$ $CH_2CH_2COOCH_3$ bedeuten. Ein besonders bevorzugter Farbstoff der allgemeinen Formel IV ist außerdem der Farbstoff mit $R^{12}$ und $R^{13}$ o- und P-$NO_2$, $R^{14}$ o-CN, $R^{15}$ $NHCOCH_3$, $R^{16}$ Wasserstoff und $R^{17}$ und $R^{18}$ Ethyl.

Besonders bevorzugte Farbstoffe der allgemeinen Formel V sind solche, in denen $R^{19}$ und $R^{20}$ Wasserstoff und $R^{21}$ und $R^{22}$ $CH_2CH_2OH$ oder $CH_2CH_2COOCH_3$ bedeuten.

Besonders bevorzugte Farbstoffe der allgemeinen Formel VI sind solche in denen $R^{23}$ $NHCOCH_3$, $R^{24}$ Wasserstoff oder $OCH_3$ und $R^{25}$ und $R^{26}$ $CH_2CH_2OCOOC_2H_5$ bedeuten.

In den Farbstoffmischungen kann das Verhältnis der verschiedenen Farbstoffe in relativ weiten Grenzen variieren. Der Gewichtsanteil des Farbstoffs der allgemeinen Formel I bzw. der Mischung aus Farbstoffen der allgemeinen Formel I beträgt bevorzugt 5 bis 98 %, besonders bevorzugt 60 bis 95 % für orangene Färbungen und 15 bis 65 % für Schwarzmischungen.

Der Gewichtsanteil der Farbstoffe der allgemeinen Formeln II bis VI oder Disperse Red 356 bzw. Mischungen davon beträgt bevorzugt 2 bis 95 %.

Für orangene Färbungen beträgt der Gewichtsanteil der Farbstoffe der allgemeinen Formeln II, III oder Disperse Red 356 besonders bevorzugt 0 bis 40 %, ganz besonders bevorzugt 0 bis 15 % und der Gewichtsanteil der Farbstoffe der allgemeinen Formel IV bis VI 0 bis 40 %, ganz besonders bevorzugt 0 bis 5 %. Für schwarze Färbungen betragen die besonders bevorzugten Gewichtsanteile der Farbstoffe der allgemeinen Formeln II, III oder Disperse Red 356 5 bis 25 %, und der Farbstoffe der allgemeinen Formeln

IV bis VI 30 bis 60 %.

Die Farbstoffe der allgemeinen Formeln I bis VI sowie Disperse Red 356 sind bekannt und können nach dem Fachmann bekannten Methoden, die Azofarbstoffe insbesondere durch Azokupplung, hergestellt werden.

Farbstoffmischungen können hergestellt werden durch Mischen der separat hergestellten und gefinischten Einzelfarbstoffkomponenten. Dieses Mischen kann in geeigneten Mischern oder Mühlen oder aber auch durch Einrühren in die Färbeflotte geschehen. Es ist aber bevorzugt, die separat hergestellten Einzelfarbstoffkomponenten gemeinsam zu finishen, wobei das Mischen bei der Herstellung von Farbstoffpulvern unmittelbar vor dem Sprühtrocknen, bei Farbstoffpulvern und flüssigen Farbstoffpräparationen, vorzugsweise vor dem Aufmahlen, erfolgen kann.

Das Färben mit den genannten Farbstoffen bzw. Farbstoffmischungen erfolgt in an sich bekannter Weise, vorzugsweise aus wäßriger Färbeflotte, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermosolverfahren, wobei die Ware mit der Färbeflotte geklotzt und anschließend bei etwa 200 bis 230°C fixiert wird. Das Bedrucken der genannten Materialien kann in an sich bekannter Weise so durchgeführt werden, daß die Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 120 bis 230°C mit HT-Dampf, Druckdampf oder Trockenhitze behandelt wird.

In den bei obigen Applikationen eingesetzten Färbeflotten und Druckpasten sollen die erfindungsgemäßen Farbstoffe oder Farbstoffmischungen in möglichst feiner Verteilung vorliegen. Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 $\mu$m, vorzugsweise bei etwa 1 $\mu$m.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs-und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt.

Soll der Farbstoff oder die Farbstoffmischung für den Textildruck herangezogen werden, so werden die erforderlichen Mengen der Farbstoffeinstellungen zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die sich an die Färbung anschließende Ausrüstung geschieht nach den bekannten Verfahren, die der einschlägigen Fachliteratur zu entnehmen (siehe z.B. Ullmanns Encyklopädie der technischen Chemie, 4. Aufl., Bd. 23, Seiten 77 ff. und die dort zitierte Literatur) und dem Fachmann somit bekannt sind.

Bevorzugte Verfahren sind beispielsweise das Trockenvernetzungs-Verfahren, das Schock-Trocknung-Kondensations-Verfahren und das Postcure-Verfahren.

Für den Einsatz in diesen Verfahren für die Hochveredelung von Polyester/Cellulose-Mischgeweben kommen Chemikalien in Frage, die geeignet sind, die Cellulosemoleküle der Fasern zu vernetzen.

Bevorzugt sind N-Hydroxymethyl- oder N-Methoxymethyl-derivate von Harnstoff, wie z.B. Bis(hydroxymethyl)harnstoff und Bis(methoxymethyl)harnstoff, von Melamin, wie z.B. Hexamethoxymethylmelamin, von 2-Imidazolidinonen, wie z.B. Bis(hydroxymethyl)ethylenharnstoff und Bis(hydroxymethyl)-dihydroxyethylenharnstoff oder von anderen Heterocyclen, wie z.B. Bis(hydroxymethyl)-propylenharnstoff, Bis(hydroxymethyl)-hexahydrotriazinone und Bis(methoxymethyl)uron.

Die Ausrüstung kann auch eine Behandlung mit Weichmachern umfassen. Als Weichmacher werden insbesondere Verbindungen verwendet, die einen hydrophilen und einen hydrophoben Molekülteil aufweisen, die jedoch ansonsten sehr unterschiedliche Konstitutionen aufweisen können. Anionische Weichmacher sind beispielsweise Fettsäuresalze, Salze von Schwefelsäureestern oder Sulfonsäuren und Kondensationsprodukte von Fettsäuren mit Verbindungen, die Sulfonatgruppen enthalten. Nichtionogene Weichmacher sind beispielsweise Oxethylierungsprodukte von Fettsäuren, Fettalkoholen, Fettsäureamiden und Fettaminen. Bevorzugt sind kationische Weichmacher, wie beispielsweise Salze oder quarternierte Verbindungen von tertiären Aminen, Aminoestern und Aminoamiden.

Das erfindungsgemäße Verfahren liefert auf ganz oder teilweise aus Polyester bestehenden Fasermaterialien, bevorzugt auf Fasermaterialien aus Polyestern und natürlichen Fasermaterialien, besonders bevorzugt auf Polyester/Cellulose-Fasern hervorragend thermomigrierechte Färbungen.

Bevorzugte Polyester sind dabei hochmolekulare Polyester, insbesondere Polyethylenglycolterephthalate. Bei Einsatz von Farbstoffen der allgemeinen Formel I alleine oder in geeigneten Mischungen mit roten bzw. blauen Farbstoffen der allgemeinen Formeln II bis VI können orange Färbungen erhalten werden, die im Farbton gleich wie die weitverbreiteten Farbstoffe C.I. Disperse Orange 29 und 30 sind, aber deren Nachteil der geringen Thermomigrierechtheit nicht aufweisen.

Bei geeigneten Mischungsverhältnissen der Farbstoffe können nicht nur orange, sondern auch gelbbraune und braune Färbungen erhalten werden.

Schließlich liefern geeignete Mischungen der Farbstoffe der allgemeinen Formel I mit roten und blauen Farbstoffen der Formeln II bis IV schwarze Färbungen hoher Thermomigrationsechtheit.

Die Erfindung wird durch die folgenden Beispiele näher erläutert, Prozentangaben sind Gewichtsprozente.

Beispiel 1

1,0 g des Farbstoffs der allgemeinen Formel I, in der $R^1$ Methyl und R Ethyl bedeuten wird in feindispergierter Form in 2000 ml Wasser eingerührt. Die so erhaltene Dispersion wird mit 2,0 g Natriumacetat und 1,0 g eines handelsüblichen Dispergiermittels auf Basis eines Naphthalin-sulfonsäure-Formaldehyd-Kondensats versetzt und mit Essigsäure auf einen pH-Wert von 4-5 eingestellt. In die so erhaltene Färbeflotte bringt man 100 g eines Polyester/Zellwolle-Mischgewebes 70 : 30 ein und färbt 45 Minuten bei 130°C. Anschließend wird gespült, mit einer 0.2%igen Natriumdithionitlösung während 15 Minuten bei 70 bis 80°C reduktiv nachbehandelt, nochmals gespült und getrocknet. Die so hergestellte Färbung wird einer Hochveredelung unterzogen, indem sie mit einer wässrigen Lösung imprägniert wird, die in einem Liter 40 g eines Reaktantharzes auf Basis Dimethyloldihydroxyethylenharnstoff, 20 g eines Melaminharzes auf Basis partiell veretherter Methylolmelamine, 20 g einer nichtionischen Polyethylenemulsion, 20 g eines anionischen Weichmachers auf Silikonbasis und 8 g eines Katalysators auf Basis eines Aminsalzes enthält, anschließend eine Minute bei 100°C getrocknet und 30 Sekunden auf 180°C erhitzt wird. Auf diese Weise erhält man eine hochveredelte farbstarke orangene Färbung mit sehr guten coloristischen Eigenschaften und einer perfekten Waschechtheit bei 60°C mit ECE-Waschmitteln gemäß DIN 54017/C2.

Beispiel 2 (Vergleichsbeispiel)

1,0 g des Farbstoffs der allgemeinen Formel I, in der $R^1$ Methyl und R 2-Ethylhexyl bedeuten, wird in feindispergierter Form in 2000 ml Wasser eingerührt. Die so erhaltene Dispersion wird mit 2,0 g Natriumacetat und 1,0 g eines handelsüblichen Dispergiermittels auf Basis eines Naphtalin-sulfonsäure-Formaldehyd-Kondensats versetzt und mit Essigsäure auf einen pH-Wert von 4-5 eingestellt. In die so erhaltene Färbeflotte bringt man 100 g eines Polyester/Zellwolle-Mischgewebes 70 : 30 ein und färbt 45 Minuten bei 130°C. Anschließend wird gespült, mit einer 0.2%igen Natriumdithionitlösung während 15 Minuten bei 70 bis 80°C reduktiv nachbehandelt, nochmals gespült und getrocknet. Die so hergestellte Färbung wird einer Hochveredelung unterzogen, indem sie mit einer wässrigen Lösung imprägniert wird, die in einem Liter 40 g eines Reaktantharzes auf Basis Dimethyloldihydroxyethylenharnstoff, 20 g eines Melaminharzes auf Basis partiell veretherter Methylolmelamine, 20 g einer nichtionischen Polyethylenemulsion, 20 g eines anionischen Weichmachers auf Silikonbasis und 8 g eines Katalysators auf Basis eines Aminsalzes enthält, anschließend eine Minute bei 100°C getrocknet und 30 Sekunden auf 180°C erhitzt wird. Auf diese Weise erhält man eine hochveredelte farbstarke orangene Färbung mit guten coloristischen Eigenschaften, aber einer schlechten Waschechtheit bei 60°C mit ECE-Waschmitteln gemäß DIN 54017/C2, insbesondere mit starker Anschmutzung des Polyamidanteils im Mehrfaserband.

Beispiele 3 bis 7

Unter Verwendung der in folgender Tabelle aufgeführten Farbstoffe erhält man auf gleiche Weise wie in Beispiel 1 beschrieben farbstarke orangene Färbungen mit sehr guten Echtheitseigenschaften.

| Beispiel | Farbstoff der allgemeinen Formel I $R^1$ | R |
|---|---|---|
| 3 | Methyl | Methyl |
| 4 | Methyl | 2-Ethoxyethyl |
| 5 | Methyl | 3-Methoxypropyl |
| 6 | Methyl | 3-Ethoxypropyl |
| 7 | Methyl | 2-Isopropoxyethyl |

Beispiel 8

20,0 g des Farbstoffs der allgemeinen Formel I, in der $R^1$ Methyl und R Ethyl bedeuten, werden in feiner Verteilung einer Druckpaste, die 45,0 g Johannisbrotmehl, 6,0 g Natrium-m-nitrobenzolsulfonat und 3,0 g Zitronensäure auf 1000 g enthält, einverleibt. Wird Polyester/Zellwolle-Mischgewebe mit dieser Druckpaste bedruckt, das bedruckte Gewebe nach dem Trocknen 15 Min. bei 1,5 atü Dampfdruck gedämpft, gespült, geseift, erneut gespült und einer Veredelung wie in Beispiel 1 beschrieben unterzogen, so erhält man einen farbstarken orangenen Druck von sehr guten coloristischen Eigenschaften.

Beispiel 9

Eine Mischung von 0.921 g des Farbstoffs der allgemeinen Formel I, in der $R^1$ Methyl und R Ethyl bedeuten, in formierter Form, 0.077 g des Rotfarbstoffes der allgmeinen Formel II, in der $R^2$ o-Chlor, $R^3$ p-Nitro, $R^5$ $NHCOCH_3$, $R^4$ und $R^6$ Wasserstoff und $R^7$ und $R^8$ $CH_2CH_2OCOCH_3$ bedeuten in formierter Form und 0.002 g des Blaufarbstoffs der allgemeinen Formel IV, in der $R^{12}$ und $R^{13}$ o,p-Nitro, $R^{14}$ o-Chlor, $R^{15}$ $NHCOCH_3$, $R^{16}$ $OCH_3$ und $R^{17}$ und $R^{18}$ $CH_2CH_2OCOCH_3$ bedeuten in formierter Form wird wie in Beispiel 1 beschrieben zur Herstellung einer hochausgerüsteten Färbung eingesetzt. Man erhält eine Färbung mit dem Farbton von Orange 29, aber sehr guter Thermomigierechtheit.

Beispiel 10

Eine Mischung von 0.908 g des Farbstoffs der allgemeinen Formel I, in der $R^1$ Methyl und R Ethyl bedeuten in formierter Form,. 0.090 g des Rotfarbstoffs der allgemeinen Formel III, in der $R^9$ $CH_3$, $R^{10}$ n-$C_4H_9$ und $R^{11}$ $CH_2CH_2CH_2COOCH_3$ bedeuten in formierter Form und 0.002 g des Blaufarbstoffs der Formel IV, in der $R^{12}$ und $R^{13}$ o,p-Nitro, $R^{14}$ o-Chlor, $R^{15}$ $NHCOCH_3$, $R^{16}$ $OCH_3$ und $R^{17}$ und $R^{18}$ $CH_2CH_2OCOCH_3$

bedeuten in formierter Form wird wie in Beispiel 1 beschrieben zur Herstellung einer hochausgerüsten Färbung eingesetzt. Man erhält eine Färbung mit dem Farbton von Orange 29, aber sehr guter Thermomigrierechtheit.

## Patentansprüche

1. Verfahren zur Herstellung ausgerüsteter, hochthermomigrierechter Färbungen auf ganz oder teilweise aus Polyester bestehenden Fasermaterialien, dadurch gekennzeichnet, daß mit einem oder mehreren Farbstoffen der allgemeinen Formel I

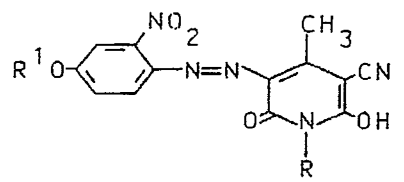

(I)

worin

| | |
|---|---|
| R | lineares ($C_1$ -$C_3$)-Alkyl oder mit einem Sauerstoffatom unterbrochenes ($C_3$ -$C_6$)- Alkyl und |
| $R^1$ | unterbrochenes ($C_3$-$C_6$)- ($C_1$-$C_4$)-Alkyl |

bedeuten, gefärbt wird und anschließend die so erhaltene Färbung ausgerüstet wird.

2. Verfahren gemäß Anspruch 1, dadurch gekennzeichnet, daß R Ethyl oder Methoxypropyl bedeuten.

3. Verfahren gemäß Anspruch 1 und/oder 2, dadurch gekennzeichnet, daß $R^1$ Methyl bedeutet.

4. Verfahren gemäß einem oder mehreren der Ansprüche 1 bis 3, dadurch gekennzeichnet, daß die Farbstoffe der allgemeinen Formel 1 in Mischung mit roten oder mit blauen oder in Mischung mit roten und blauen Farbstoffen eingesetzt werden.

5. Verfahren gemäß Anspruch 4, dadurch gekennzeichnet, daß als rote Farbstoffe Farbstoffe der allgemeinen Formel II

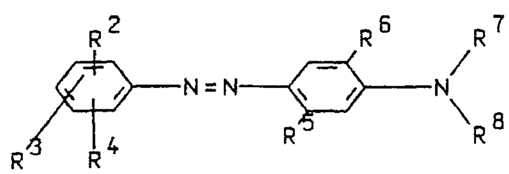

(II)

worin

| | |
|---|---|
| $R^2$, $R^3$, $R^4$ | unabhängig voneinander Wasserstoff, Methyl, Chlor, Brom, Nitro, $SO_2CH_3$, COOX oder Cyan, wobei mindestens ein Rest ungleich Wasserstoff sein muß. |
| $R^5$ | Wasserstoff, X, NHCOX oder $NHSO_2CH_3$; |
| $R^6$ | Wasserstoff oder Chlor; |
| $R^7$ und $R^8$ | unabhängig voneinander Wasserstoff, X, $(CH_2)_nOCOX$, $(CH_2)_nCOOX$ oder $(CH_2)_nCN$, wobei nicht beide Reste gleichzeitig für Wasserstoff stehen können; |
| X | lineares ($C_1$-$C_4$)-Alkyl, bevorzugt ($C_1$-$C_2$)-Alkyl und |
| n | eine ganze Zahl von 1 bis 4, bevorzugt 2, |

bedeuten,

Farbstoffe der allgemeinen Formel III

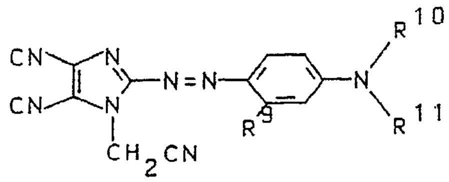

(III)

worin

| | |
|---|---|
| $R^9$ | Wasserstoff, Chlor, Brom oder Methyl und |
| $R^{10}$ und $R^{11}$ | unabhängig voneinander lineares $(C_1-C_4)$-Alkyl, $(CH_2)_3COOCH_3$ oder $(CH_2)_3COOC_2H_5$ |

bedeuten,

oder der Farbstoff C.I. Disperse Red 356 eingesetzt werden.

6. Verfahren gemäß Anspruch 4, dadurch gekennzeichnet, daß als blaue Farbstoffe Farbstoffe der allgemeinen Formel IV

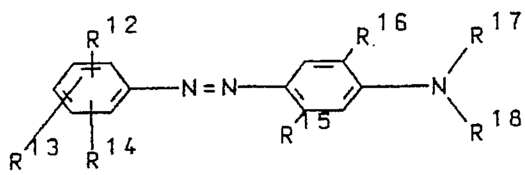

(IV)

worin

| | |
|---|---|
| $R^{12}$, $R^{13}$, $R^{14}$ | unabhängig voneinander Wasserstoff, Methyl, Chlor, Brom, Nitro, $SO_2CH_3$, COOX oder Cyan, wobei mindestens ein Rest ungleich Wasserstoff sein muß: |
| $R^{15}$ | Wasserstoff, X, NHCOX oder $NHSO_2CH_3$; |
| $R^{16}$ | Wasserstoff oder OY; |
| $R^{17}$ und $R^{18}$ | unabhängig voneinander Wasserstoff, X, $(CH_2)_n$ OCOX, $(CH_2)_nCOOX$ oder $(CH_2)_nCN$, wobei nicht beide Reste gleichzeitig für Wasserstoff stehen können; |
| X | lineares $(C_1-C_4)$-Alkyl, bevorzugt $(C_1-C_2)$-Alkyl; |
| n | eine ganze Zahl von 1 bis 4, bevorzugt 2, und |
| Y | lineares $(C_1-C_4)$-Alkyl, bevorzugt $(C_1-C_2)$-Alkyl, oder mit einem Sauerstoffatom unterbrochenes $(C_3-C_6)$Alkyl, bevorzugt $(C_1-C_2)$-Alkoxyethyl, |

bedeuten,

Farbstoffe der allgemeinen Formel V

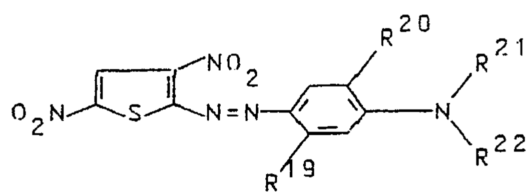

(V)

worin

| | |
|---|---|
| $R^{19}$ | Wasserstoff, X, NHCOX oder $NHSO_2CH_3$; |
| $R^{20}$ | Wasserstoff oder Chlor; |
| $R^{21}$ und $R^{22}$ | unabhängig voneinander Wasserstoff, X, $(CH_2)_nOH$, $(CH_2)_nOCOX$, $(CH_2)_nCOOX$ oder $(CH_2)_nCN$, wobei nicht beide Reste gleichzeitig für Wasserstoff stehen können; |
| X | lineares $(C_1-C_4)$-Alkyl, bevorzugt $(C_1-C_2)$-Alkyl und |
| n | eine ganze Zahl von 1 bis 4, bevorzugt 2, |

bedeuten

oder Farbstoffe der allgemeinen Formel VI

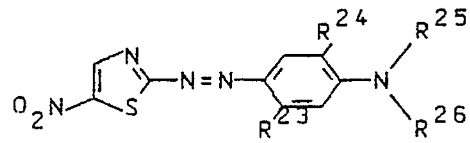

(VI)

worin

| | |
|---|---|
| $R^{23}$ | Wasserstoff, X, NHCOX oder $NHSO_2CH_3$; |
| $R^{24}$ | Wasserstoff oder OY; |
| $R^{25}$ und $R^{26}$ | unabhängig voneinander Wasserstoff, X, $(CH_2)_nOCOOX$, $(CH_2)_nOCOX$, $(CH_2)_nCOOX$ oder $(CH_2)_nCN$, wobei nicht beide Reste gleichzeitig für Wasserstoff stehen können; |
| X | lineares $(C_1$-$C_4)$-Alkyl, bevorzugt $(C_1$-$C_2)$-Alkyl |
| n | eine ganze Zahl von 1 bis 4, bevorzugt 2 und |
| Y | lineares $(C_1$-$C_4)$-Alkyl, bevorzugt $(C_1$-$C_2)$-Alkyl, oder mit einem Sauerstoffatom unterbrochenes $(C_3$-$C_6)$-Alkyl, bevorzugt $(C_1$-$C_2)$-Alkoxy ethyl, |

bedeuten, eingesetzt werden.